(19) Europäisches Patentamt
European Patent Office
Office européen des brevets

(11) **EP 4 427 583 A1**

(12) **EUROPÄISCHE PATENTANMELDUNG**

(43) Veröffentlichungstag:
**11.09.2024 Patentblatt 2024/37**

(21) Anmeldenummer: **24161686.1**

(22) Anmeldetag: **06.03.2024**

(51) Internationale Patentklassifikation (IPC):
**A01G 9/029** (2018.01)  **A01G 9/04** (2006.01)
**A01G 9/02** (2018.01)

(52) Gemeinsame Patentklassifikation (CPC):
**A01G 9/0291; A01G 9/026; A01G 9/0293;**
A01G 9/045

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **06.03.2023 DE 102023105488**

(71) Anmelder: **Neisser Geoprodukte GmbH**
**57392 Schmallenberg (DE)**

(72) Erfinder: **Neisser, Reinhold**
**57392 Schmallenberg (DE)**

(74) Vertreter: **Bendele, Tanja**
**RUHR-IP Patentanwälte**
**Wolfsbachweg 29**
**45133 Essen (DE)**

(54) **BEHÄLTER ZUR ANZUCHT VON PFLANZEN, INSBESONDERE BEHÄLTER ZUR ANZUCHT VON PFLANZEN AUS SAMEN**

(57) Gegenstand der Erfindung ist ein Behälter (0) zur Anzucht von Pflanzen zur Aufnahme von Saatgut und optional Substrat aufweisend mindestens eine Seitenwand (1) und optional zumindest teilweise einen Boden (2). Der Behälter ist insbesondere zur Anzucht von Forstgehölzen ausgebildet. Des Weiteren umfasst das Material des Behälters ein flächiges textiles Gebilde, insbesondere einen Vliesstoff, umfassend i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser und, wobei der Vliesstoff ferner umfasst Naturfasern umfassend Pflanzenfasern, Tierfasern, die vorzugsweise nicht chemisch behandelt sind. Das flächige textile Gebilde weist eine Biegesteifheit (mN/cm) bestimmt nach EN ISO 9073-7 : 1995 (Cantilever-Methode) von größer gleich 950 mN/cm, insbesondere bei einem Flächengewicht von 250 bis 1000 g/m², auf.

Fig. 1

EP 4 427 583 A1

**Beschreibung**

Gegenstand der Erfindung ist ein Behälter zur Anzucht von Pflanzen zur Aufnahme von Saatgut und optional Substrat aufweisend mindestens eine Seitenwand und optional zumindest teilweise einen Boden. Der Behälter ist insbesondere zur Anzucht von Forstgehölzen ausgebildet. Des Weiteren umfasst das Material des Behälters ein flächiges textiles Gebilde, insbesondere einen Vliesstoff, umfassend i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser und, wobei der Vliesstoff ferner umfasst.

Naturfasern umfassend Pflanzenfasern, Tierfasern, die vorzugsweise nicht chemisch behandelt sind. Das flächige textile Gebilde weist eine Biegesteifheit (mN•cm) bestimmt nach EN ISO 9073-7 : 1995 (Cantilever-Methode) von größer gleich 950 mN•cm, insbesondere bei einem Flächengewicht von 250 bis 1000 g/m$^2$, auf.

Im Stand der Technik sind Pflanztöpfe aus Torf und anderen biologisch abbaubaren Materialien bekannt, die dem Anwender verschiedene Funktionen bieten. Nachteilig an den meisten Pflanztöpfen ist, dass Pflanztöpfe aus Torf zu einer Verminderung der Moore beitragen. Weitere bekannte bioabbaubare Pflanztöpfe sind zwar nach der DIN13432 biologisch abbaubar, doch der Abbau erfolgt bei erhöhten Temperaturen von über 25 °C bis hin zu 60 °C. Einige Produkte basieren auf bioabbaubaren Polymeren umfassend pflanzliche Fasern, die im Spritzguss hergestellt werden. Bekannte Torftöpfe werden mit Blumen- oder Anzuchterde gefüllt, in die die Samen gesteckt werden. Die Töpfe werden gemeinsam in größere Anzuchtschalen gestellt, um sie zu gießen ohne das Wasser austritt. Torftöpfe sind in der Regel als gepresste Tabletten erhältlich.

Weitere Nachteile der bekannten Pflanztöpfe sind, dass die gebildeten Wurzeln nicht durch die Pflanztöpfe hindurchwachsen können. Ein weiterer Nachteil ist, dass die mechanische Stabilität von bioabbaubaren Pflanzgefäßen in der Regel gering ist, wenn Wurzeln durch die Pflanztöpfe hindurchwachsen können sollen. Zudem ist in dieser Konstellation dann auch die Wasseraufnahme der Pflanztöpfe erhöht, so dass sich eine Fäulnis an den Wurzeln ausbilden kann.

Aus der DE102020132306A1 sind Behältnisse bekannt, die ein textiles Gebilde und ein Beschichtungsmaterial aufweisen, wobei das textile Gebilde cellulosische Fasern umfasst, die bevorzugt Cellulosemultifilamentgarne sind. Gemäß der Definition der Patentanmeldung handelt es sich bei Filamenten um Fasern deren Länge im Verhältnis zu ihrer Dicke nahezu unendlich groß ist. Beispielsweise kann ein Filament eine gesamte Garnspule ausbilden. Die Filamente werden künstlich aus Lösungen oder der Schmelze gesponnen. Das Beschichtungsmaterial kann auf der Innen- oder auf der Außenseite des textilen Gebildes aufgetragen sein. Das Behältnis ist eine Pflanztasche, die mit Mutterboden gefüllt wird und zur Begrünung in einem Hochbeet geeignet ist.

Aufgabe der Erfindung ist es, für die Anzucht von Pflanzen, insbesondere von Forstgehölzen wie Laubbäumen und Nadelbäumen, wie Pflanzen mit Pfahlwurzeln, ein Behältnis bereitzustellen, das für die Keimung von Saatgut geeignet ist. Insbesondere soll das Behältnis sich sehr gut zur Ausbildung von Pfahlwurzeln sowie einem gut ausgebildeten Wurzelballen eignen. Während der Keimung und der ersten Wachstumsphase des Keimlings soll diesem Halt geboten werden. Ferner soll das Behältnis vorteilhaft die Feuchtigkeit am Wurzelballen regulieren können. Nach einer weiteren Aufgabe ist es bevorzugt, wenn das Behältnis Pflanzenstärkungsmittel bzw. Biostimulanzien aufweist. Des Weiteren besteht für die Anzucht von Pflanzen ein Bedarf an Produkten, die die Anordnung in einer Multitopfplatte bieten, eine definierte Stabilität für ein bis zwei Vegetationsperioden aufweisen und/oder über eine Feuchtigkeitsregulierung verfügen und eine Wurzelhilfe bereitstellen. Des Weiteren besteht ein Bedarf an einem Behältnis zur Anzucht von Samen, das bei üblichen Witterungsbedingungen, d.h. insbesondere bei -10 bis 35 °C, vorzugsweise -10 bis 25 °C, vollständig kompostierbar ist, und während der Anzucht weiterhin seine Stabilität beibehält.

Gegenstand der Erfindung ist ein Behältnis nach Anspruch 1 wobei bevorzugte Ausführungsformen in den Unteransprüchen und detailliert in der Beschreibung offenbart sind. Ferner ist Gegenstand der Erfindung die Verwendung der Behälter nach Anspruch 17 als Anzuchtbehälter für Samen und/oder Keimlinge von Pflanzen, wie insbesondere Forstgehölze. Zudem ist Gegenstand der Erfindung ein Kit nach Anspruch 18 umfassend ein Trägersystem und mindestens zwei Behälter.

Überraschend konnte ein Behältnis zur Anzucht von Pflanzen, insbesondere zur Keimung von Saatgut und/oder zum Wachstum von Keimlingen und jungen Pflanzen, bereitgestellt werden. Gegenstand der Erfindung ist somit ein Behältnis zur Anzucht von Pflanzen und/oder zum Wachstum von Pflanzen, aufweisend einen Hohlraum zur Aufnahme von Saatgut und optional Substrat, wie vorteilhaft Anzuchterde, sowie mindestens eine Seitenwand und optional zumindest teilweise einen Boden, wobei das Material des Behälters umfasst ein flächig ausgebildetes textiles Gebilde, insbesondere einen Vliesstoff, und i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser. Besonders bevorzugte textile Gebilde umfassen Hemicellulosen. Dabei ist es besonders bevorzugt, wenn das flächige textile Gebilde eine Biegesteifheit (mN•cm) bestimmt nach EN ISO 9073-7 : 1995 (Cantilever-Methode) von größer gleich 950 mN•cm aufweist, insbesondere weist das Gebilde eine Biegesteifheit von 950 mN•cm bis 2500 mN•cm auf.

Ebenso Gegenstand der Erfindung ist ein Behälter umfassend ein flächiges textiles Gebilde umfassend, insbesondere an der Außenseite Gebildes des Behälters, umfassend i) natürliches Wachs und/oder ii) teilsynthetischen Wachs oder Gemische dieser von 10 bis 300 g/m$^2$ auf, wobei optional das Gesamtflächengewicht des Gebildes des Behälters von 200 bis 1000 g/m$^2$, insbesondere von 300 bis 600 g/m$^2$ betragen kann. Bevorzugt betragen i) und/oder ii) davon von 30 bis 150 g/m$^2$; weiter bevorzugt von 50 bis 100 /m$^2$.

Die erfindungsgemäßen Behälter ermöglichen es Samen oder Keimlinge in den Behältern umfassen Substrat keimen und wachsen zu lassen bis sie zur Auspflanzung bereit sind. Vorteil des erfindungsgemäßen Behälters ist, dass die Auspflanzung unmittelbar mit dem Behälter erfolgen kann. Der Behälter ist in der Lage die Wurzel auch ausgepflanzt in der Natur zu schützen und/oder die Feuchtigkeit zu regulieren, wobei die Wurzeln bereits zuvor oder ausgepflanzt auf leichte Weise in den, den Behälter umgebenden Boden treiben können. Da der Behälter ohne Boden oder einen zumindest teilweise ausgebildeten Boden aufweist können die Wurzeln leicht im Bereich des Bodens aus dem Behälter austreten. Alternativ oder zusätzlich können im Bereich des Bodens und des unteren Bereiches der mindestens einen Seitenwand Öffnungen vorgesehen sein. Durch diese Öffnungen können die Wurzeln ebenfalls austreten. Auf diese Weise wird ein sogenannter Pflanzschock der Keimlinge oder jungen Pflanzen synonym zu Sämling bei einer Einpflanzung vermieden. Je nach Ausgestaltung kann der Behälter Pflanzenstärkungsmittel synonym zu Biostimulanzien aufweisen, so dass die Keimlinge oder Pflanzen schneller und kräftiger anwachsen können. Der Umgebungswechsel wird für die Pflanze so gering wie möglich gehalten. In einer Alternative kann der Behälter einen vollständig ausgebildeten Boden aufweisen.

Des Weiteren ist es bevorzugt, wenn der Behälter über eine Düngefunktion und/oder Schutzfunktion verfügt. Die Düngefunktion kann erzielt werden, wenn das Material des Behälters und insbesondere das Material des textilen Gebildes Stickstoff-enthaltende Fasern oder Düngemittel aufweist. Als Stickstoff-enthaltende Faser gilt insbesondere Wolle, wie Schafswolle. Dabei kann es von Vorteil sein, wenn der Gehalt an Wolle im Material des Behälters oder des Gebildes 1 bis 30 Gew.-%, insbesondere von 5 bis 20 Gew.-%, bevorzugt um 10 Gew.-% in Bezug auf die jeweilige Gesamtzusammensetzung, d.h. des Behälters oder des Gebildes, beträgt.

Alternativ kann das Material des Behälters oder das Material des Gebildes mit Pflanzenstärkungsmitteln synonym zu Biostimulanzien ausgerüstet sein. Pflanzenstärkungsmittel können umfassen Mikroorganismen.

Ferner ist es bevorzugt, wenn eine Feuchteregulierung nicht nur durch eine mechanisch vorgesehene Drainage im Produkt bereitgestellt wird, sondern auch eine materialbedingte Feuchteregulierung möglich ist. Eine solche Feuchteregulierung wird durch das natürliche oder teilsynthetische Wachs ermöglicht. So würde ein textiles Gebilde mit einem Gewicht von 5 g, welches zu 100 Gew.-% aus Hanf besteht, innerhalt von 429 Sekunden gemäß ISO 9073-6 (12/2000), die die Saugfähigkeit bestimmt, untersinken bzw. untergehen. Demgegenüber kann die Untersinkzeit von Proben, welche mit einer Cellulosediacetatfolie beschichtet sind deutliche reduziert werden. Unabhängig davon, ob die Cellulosediacetatfolie (100 Mikrometer) glatt, perforiert oder gedochtet ist kann die Untersinkzeit auf über 1250 Sekunden bis 1570 Sekunden erhöht werden.

Ein erfindungsgemäßer Behälter ist aufgrund des Materials des textilen Gebildes sowie der Behälterform besonders gut zur Ausbildung von Pfahlwurzeln von Pflanzen sowie zur Ausbildung von gut ausgebildeten Wurzelballen geeignet. Darüber hinaus kann der Behälter Topf nach der Anzucht des Keimlings (Sämlings) nach einer gewissen Anzuchtdauer, mit dem in dem Topfsubstrat aus dem Saatkorn entwickelten Junggehölz einschl. des Wurzelballens im Forst ausgepflanzt werden.

Die Saugfähigkeit des Gebildes mit einer Kaschierung, synonym zu Beschichtung, mit Carnaubawachs kann die Untersinkzeit auf größer gleich 4900 Sekunden erhöhen. Um Untersinkzeiten von 5400 Sekunden für ein Hanfvlies einzustellen reicht eine Beschichtung mit 65 g/m$^2$, insbesondere einem Gehalt von 12 Gew.-% Carnauba-Wachs und 88 Gew.-% Hanfvlies in Bezug auf das Gesamtgewicht von 100 Gew.-% des Materials des Gebildes.

Die Wasseraufnahme eines textilen Gebildes, insbesondere Vlieses, besonders bevorzugt Hanfvlies, kann von über 360 % Wasseraufnahme des unbehandelten Gebildes, auf unter 60 % bis 38% durch Beschichtung mit einer Folie gesenkt werden. Die Beschichtung, insbesondere des Behälters, insbesondere der Außenseite des Behälters, oder des textilen Gebildes, insbesondere auf der späteren Außenseite, mit natürlichem und/oder teil synthetischem Wachs führt zu einer Reduktion der Wasseraufnahme von nur noch 10 bis 60%, bevorzugt von 20 bis 55 %, insbesondere in Bezug auf das Trockengewicht des Behälters oder Gebildes. Somit kann mit einer Beschichtung und/oder Tränkung des Gebildes mit natürlichen und/oder teilsynthetischen Wachsen einerseits die Stabilität bzw. Steifigkeit des Gebildes eingestellt werden und zugleich die Saugfähigkeit reguliert werden. So kann durch die Wahl des natürlichen und/oder teilsynthetischen Wachses spezifisch die Saugfähigkeit auf die Bedürfnisse der jeweiligen Pflanze eingestellt werden. Grundsätzlich kann eine Beschichtung und/oder Tränkung des Behälters, insbesondere des textilen Gebildes, mit 50 bis 500 g/m$^2$ natürlichen und/oder teilsynthetischem Wachs erfolgen, um eine Reduktion der Wasseraufnahme auf 10 bis 60 % in Bezug auf das Trockengewicht des Behälters oder Gebildes zu erzielen.

Des Weiteren ist es bevorzugt, wenn der Behälter über eine Wurzelhilfe verfügt. Dazu kann der Behälter im Bereich des Bodens und/oder im unteren Bereich der mindestens einen Seitenwand mit Löchern oder Poren versehen sein. Bevorzugt sind Stanzlöcher im Gebilde im unteren Bereich der mindestens einen Seitenwand und optional im Bereich des zumindest teilweise ausgebildeten Bodens.

Ein besonders bevorzugtes textiles Gebilde des Behälters ist aus Naturfasern ausgewählt aus pflanzlichen Fasern und/oder tierischen Fasern gebildet. Pflanzliche Fasern umfassen u.a. Kapok, Baumwolle, Flachs, Hanf, Jute Ramie, Sisal, Manila, Kokos, Strohfasern, Nessel, Bast, Pina, Kokos, Palm, Bananen/Abaca, Lilien, Maulbeerbast/Kozo-Baumwolle, Holzspäne, Neptun-Gras (Posidonia oceanica) und tierische Fasern umfassen Wolle, wie Schafswolle, Haare und Seiden. Bevorzugt umfasst das Gebilde keine Fasern aus Holz. Ein textiles Gebilde aus Hanffasern ist besonders bevorzugt, wobei das flächige textile Gebilde, vorzugsweise ein Vliesstoff aus Hanffasern, Flachs, Kenaf, Nessel, wie Ramie, Baumwolle, Sisal, Strohfasern oder Jute oder Mischungen umfassend mindestens zwei der genannten Fasern, ist, das mit mindestens einem natürlichen Wachs oder einem teilsynthetischen Wachs beschichtet oder getränkt ist. Ein Vlies, dass als Nassvliesstoff nach bekannten Verfahren hergestellt wird, wie beispielsweise (https://www.titk.de/forschung/textil-und-werkstoff-forschung/textile-laminate/nassvliesstoffe/) weist eine sehr viel geringere Biegesteifigkeit als ein Nadelvlies auf. Zudem werden Nassvliese in der Regel mit Bindemitteln oder thermisch durch Thermobonding verfestigt. Demgegenüber werden Nadelvliese mechanisch verfestigt, indem die Fasern umorientiert werden, wodurch es zu Verschlingungen und/oder Verriegelungen der Fasern im Fasermaterial, durch die Umorientierung und spezifische Faserlänge von Nadelvlies weist ein Nadelvlies eine besonders hohe Biegesteifigkeit auf. Die erfindungsgemäßen Behälter zur Anzucht von Pflanzen aus Nadelvlies weisen vorzugsweise eine Formstabilität auf, dass sie selbständig ihre Geometrie behalten und/oder die Seitenwände aufgerichtet stehen bleiben.

Bevorzugte natürliche Wachse umfassen Carnaubawachs und hydriertes Rizinusöl. Carnaubawachs eignet sich besonders gut, da das Wachs besonders hart ist und dem Gebilde, insbesondere dem Vliesstoff die notwendige Stabilität bzw. Standfestigkeit verleiht, die sich insbesondere in der Biegesteifheit ausdrückt. Hanffasern umfassen zu 60 bis 70 Gew.-% Cellulose und zu 10 bis 20 Gew.-% Hemicellulose.

Nach einer weiteren Ausführungsform der Erfindung ist ein flächig ausgebildetes textiles Gebilde bevorzugt, dass umfasst ein Gewebe, Gewirk, insbesondere Filz, Gestrick oder ein Vliesstoff, bevorzugt ist ein Vliesstoff, besonderes bevorzugt ein Nadelvliesstoff. Dabei ist es weiter bevorzugt, wenn die mittlere Faserfeinheit 1 dtex bis 250 dtex, insbesondere von 1 dtex bis 160 dtex beträgt, oder alternative bevorzugt ist eine mittlere Faserfeinheit von 1 dtex bis 10 dtex sowie auch von 40 dtex bis 300 dtex. Besonders bevorzugt ist erfindungsgemäße eine Faserfeinheit von 30 dtex bis 200 dtex, insbesondere des textilen Gebildes. Besonders bevorzugt umfasst ein erfindungsgemäßes Nadelvlies die vorgenannte Feinheit und/oder nachfolgend genannte mittlere Faserlänge. Dieser Bereich entspricht der Faserfeinheit der natürlichen Fasern. Zusätzlich ist es bevorzugt, wenn die mittlere Faserlänge von 25 mm bis 120 mm beträgt. Bestimmt wird die Faserfeinheit gemäß DIN EN ISO 1973:1995-12, die Faserlänge kann bestimmt werden gemäß DIN 53808-1-2003-01.

Ein erfindungsgemäßes Nadelvlies umfasst vorzugsweise ein Flächengebilde, das durch wechselndes Einstecken und Ausziehen einer Vielzahl von Nadeln mit einem Widerhaken in ein Faservlies verfestig wurde. Ein Filz kann durch Filzen oder Walken verfestigt werden. Durch die Struktur von Wollfasern im Filz, die Schuppen besitzt, verfilzt Wolle unter Einwirkung von Druck, Schub und Feuchtigkeit. Um die Dichte noch zu erhöhen, kann der Filz anschließend gewalkt werden. Eine Vliesverfestigung kann erfolgen mittels Krempel/ Kardieren, Kreuzlegen, Vernadeln oder mittels Wirrvliesbildung und/oder Vernadeln. Nach einer weiteren bevorzugten Alternative ist das textile Gebilde ein einseitig genadeltes Vlies. Ein Nadelvlies weist aufgrund seiner Herstellung, nämlich indem Fasern des Fasermaterials zur Herstellung des Nadelvlieses bei der Herstellung umorientiert werden zu Verschlingungen und/oder Verriegelungen der Fasern im Fasermaterial, wodurch die Fasern im Fasermaterial des Nadelvlieses durch Form- und Reibschluss zum Nadelvlies verfestigt werden. Gegenstand der Erfindung ist somit ein Nadelvlies, indem Fasern eines Fasermaterials zur Herstellung des Nadelvlieses umorientiert werden, wodurch es zu Verschlingungen und/oder Verriegelungen der Fasern im Fasermaterial kommt, und wobei im Ergebnis die Fasern im Fasermaterial des Nadelvlieses durch Form- und Reibschluss zum Nadelvlies verfestigt werden. Ein Nadelvlies der Erfindung weist vorzugsweise vorgenannte Faserlänge und/oder Biegesteifheit (mN•cm) bestimmt nach EN ISO 9073-7 : 1995 auf.

Besonders bevorzugte i) natürliche Wachse und/oder teilsynthetische Wachse umfassen als i) natürlichen Wachse umfassend Reiswachs, Sonnenblumenwachs, Candelillawachs, Rapswachs, Carnaubawachs und/oder Mischungen umfassend mindestens zwei der genannten Wachse. Bevorzugte ii) teilsynthetische Wachse sind auf Basis von natürlichen Wachsen hergestellt. Geeignete teilsynthetische Wachse basieren bevorzugt auf hydrierten natürlichen Ölen, wie hydriertes Rizinusöl (Gehärtetes Rizinusöl). Als natürliche Wachse gelten Wachse pflanzlichen und tierischen Ursprungs, die ggf. mechanisch und/oder mittels Wasser behandelt wurden, jedoch insbesondere nicht chemisch behandelt oder in einer chemischen Reaktion zu einem neuen Produkt umgewandelt wurden.

Erfindungsgemäß gilt als Wachs ein Gemisch von Kohlenwasserstoffen, das ab 40 °C schmilzt. Bevorzugt umfasst das Gemisch Ester von Wachssäuren, insbesondere Carbonsäuren mit größer gleich 22 C-Atomen, insbesondere von 22 bis 34 C-Atomen, und vorzugsweise keine Triglyceride oder nur hydrierte Trigylceride. Als natürliche Wachse gelten Ester von Fettsäuren, insbesondere Wachssäuren, mit langkettigen aliphatischen, primären Alkoholen, den sogenannten Fettalkoholen. Natürliche Wachse umfassen daher insbesondere keine Trigylceride mit Fettsäuren. Die teilsynthetisierten Wachse können hydrierte Öle von natürlichen Ölen umfassen und somit auch hydrierte Triglyceride von Ölsäuren umfassen. Typische Ölsäuren, die zu teilsynthetischen Wachsen hydriert werden können, umfassen Paltmitinsäure, Stearinsäure etc.

Des Weiteren umfassen, sind insbesondere ausgewählt aus, i) natürliche Wachse pflanzliche Wachse und/oder tierische Wachse. Bevorzugte Wachse können somit auch umfassen i) natürlichen Wachse umfassend a) pflanzliche Wachse umfassend Reiswachs, Zuckerrohrwachs, Sonnenblumenwachs, Candelillawachs, Rapswachs, Carnaubawachs, Jojobaöl, Korkwachs, Guarumawachs *(Calathea lutea)*, Ouricuriwachs *(Syagrus coronata)*, *Kuba-Palmenwachs (Copernicia hospita),* Espartowachs *(Lygeum spartum, Stipa tenacissima),* Baumwollwachs, Reiskleiewachs, Flachswachs, Torfwachs und Rosenwachs, Jasminwachs oder das *Peetha-Wachs* vom Wachskürbis, sowie *Myrtewachs (Myrica cerifera), Wachsfeigenwachs (Ficus variegata)*, Sojawachs und/oder Mischungen umfassend zwei der genannten natürlichen Wachse, und/oder b) tierische Wachse umfassend Wollwachs, Chinawachs, Bienenwachs, Bürzeldrüsenfett, Talg, Insektenwachse, Phthiocerole (von Mykobakterien), und/oder Gemische umfassend mindestens zwei der vorgenannten natürlichen Wachse. Nach einer weiteren Alternative können die ii) teilsynthetischen Wachse umfassen a) pflanzliche Wachse und/oder b) tierische Wachse und/oder hydrierte Pflanzenöle, die in mindestens einer chemischen Reaktion oxidiert, hydriert, verestert, Verseift, amidiert und/oder in mindestens zwei der vorgenannten Reaktionen umgesetzt wurden. Teilsynthetische Wachse umfassen Esterwachse von Wachssäuren, Amide von Fett- und Wachssäuren, Alhoholwachse, Etherwachse sowie hydrierte Pflanzenöle umfassend Sojaöl, Rapsöl und/oder Rizinusöl. Besonders bevorzugte natürliche Wachse sind Carnaubawachs, Candelillawachs, Kokoswachs, Rapswachs, Palmwachs, Sojawachs und/oder Mischungen umfassend zwei der genannten Wachse. Dem Wachs kann ggf. zur Eistellung der Biegesteifheit ein Füllstoff, wie ein anorganischer Füllstoff zugegeben werden. Nach einer weiteren Ausführungsform umfasst das Gebilde 0,01 bis 5 Gew.-% anorganischen Füllstoff.

Ferner ist es bevorzugt, wenn das flächig ausgebildete textile Gebilde mit mindestens einem i) natürlichen Wachs ausgewählt aus pflanzlichen, tierischen Wachsen und Mischungen dieser, ii) teilsynthetischen Wachs auf Basis von natürlichen Wachsen, pflanzlichen Ölen oder einer Mischung dieser beschichtet und/oder getränkt ist. Die Auftragsmengen des Wachses auf das Gebilde i) und/oder ii) beträgt vorzugsweise 10 bis 500 g/m$^2$, bevorzugt von 10 bis 300 g/m$^2$. Besonders bevorzugt beträgt das Gesamtflächengewicht des Gebildes 200 bis 1000 g/m$^2$, insbesondere von 300 bis 600 g/m$^2$, wobei i) und ii) davon von 50 bis 150 g/m$^2$ betragen kann. Somit weist ein Behälter vorzugsweise Wachs umfassend i) und/oder ii) von 10 bis 300 g/m$^2$ auf. Besonders bevorzugt beträgt das Gesamtflächengewicht des Gebildes des Behälters von 200 bis 1000 g/m$^2$, insbesondere von 300 bis 600 g/m$^2$, wobei i) und ii) davon von 50 bis 150 g/m$^2$ betragen können. Dabei ist es bevorzugt, wenn das flächig ausgebildete textile Gebilde mittels Hotmeltbeschichtung oder Pulverauftrag und Thermokaschierung beschichtet und/oder getränkt ist. In Alternativen beträgt das Gesamtflächengewicht des Gebildes des Behälters von 200 bis 1000 g/m$^2$, insbesondere von 300 bis 600 g/m$^2$, wobei i) und ii) davon von 150 bis 300 g/m$^2$. Ein bevorzugtes Beispiel ist ein textives Vlies aus Hanf mit einem Flächengewicht von 250 g/m2 bis 400g/m2 und 250 g/m$^2$ bis 400 g/m$^2$ natürlichem und/oder teilsynthetischem Wachs, insbesondere Raps mit einem Gesamtflächengewicht von 500 bis 800 g/m$^2$.

Nach einer besonders bevorzugten Ausführungsform weist der Behälter ein textiles flächiges Gebilde auf, dass einseitig oder zweiseitig mit einem natürlichen Wachs, teilsynthetischen Wachs oder Mischung dieser beschichtet oder getränkt. Besonders bevorzugt ist das textile flächige Gebilde des Behälters an seiner Außenseite mit einem natürlichen Wachs, teilsynthetischen Wachs oder Mischung dieser beschichtet und/oder getränkt. Nach einer weiteren Alternative ist das textile flächige Gebilde des Behälters an seiner Außenseite und/oder Innenseite mit einem natürlichen Wachs, teilsynthetischen Wachs oder Mischung dieser beschichtet und/oder getränkt. Dabei ist es bevorzugt, wenn die Außenseite des Behälters beschichtet oder getränkt ist. Analog kann das Gewebe, Gewirk, Gestrick, Filz, Vliesstoff an der Außenseite und/oder Innenseite beschichtet und/oder getränkt sein.

Ferner ist es besonders bevorzugt, wenn der Behälter aus einem Zuschnitt eines flächig ausgebildeten textilen Gebildes gebildet ist. Dabei ist es weiter bevorzugt, wenn der Behälter aus einem umformbaren Zuschnitt, insbesondere faltbaren Zuschnitt und/oder rollbaren Zuschnitt eines flächig ausgebildeten textilen Gebildes gebildet ist, der vorzugsweise mindestens einen Falz, perforierten Linie und/oder Prägekante aufweist. Dabei ist es weiter bevorzugt, wenn der Zuschnitt ein Stanzzuschnitt oder ein Laserzuschnitt ist, besonders bevorzugt ist der Zuschnitt eine Abwicklung eines Stanzzuschnittes oder eines Laserzuschnitts. Ferner ist es bevorzugt, dass der Zuschnitt des Behälters mindestens zwei Falze, perforierten Linien und/oder mindestens zwei Prägekanten aufweist. Der mindestens eine Falz, die mindestens eine perforierte Line und Prägekante dient einer erleichterten Faltung des Zuschnitts zur Ausbildung des Behälters. Durch die erfindungsgemäße Ausbildung des Gebildes als Zuschnitt ist es möglich den Behälter auf einer Kartonfaltanlage zum Behälter falten und optional mittels Verbindungsmittel verbinden zu lassen. Als Verbindungsmittel sind Klebstoff und/oder mechanische Verbindungsmittel geeignet.

In einer Alternative können auch Behälter mittels Ausbilden eines rohrförmigen Hohlkörpers, wie polygonalem Hohlkörper, insbesondere zylindrischem Hohlkörper oder konischem Hohlkörper, wie beispielsweise durch Aufrollen des jeweiligen Zuschnitts gebildet werden. Des Weiteren können diese Behälter in einen flächigen Zuschnitt mit entsprechenden Durchbrechungen zur Aufnahme der Behälter eingefügt werden. Auf diese Weise kann beispielsweise eine Anordnung von Behältern in dem Zuschnitt ausgebildet werden. Wenn der flächige Zuschnitt zwischen den Durchbrechungen bspw. perforierte Linien aufweist, kann der Zuschnitt an diesen Linien später getrennt werden, um die Behälter zu separieren. Alternativ kann ein Zuschnitt zur Ausbildung einer Vielzahl an Behälter längliche Durchbrechungen und optional Falze aufweisen, um den Zuschnitt zu einer Anordnung umzuformen, die im Querschnitt bspw. abwechselnd aufweist flächige obere Seite, erste seitliche Seitenwand, untere Seitenwand, zweite seitliche Seitenwand, zweite flächige Oberseite, mit n-Wiederholungen ab erste seitliche Seitenwand, untere Seitenwand, zweite seitliche Seitenwand, zweite flächige Oberseite. Vorzugsweise ist n- eine Zahl zwischen 2 bis 150, vorzugsweise von 2 bis 10. In der jeweiligen flächigen Oberseite und/oder der jeweiligen ersten und zweiten Seitenwand sind Durchbrechungen, wie längliche Durchbrechungen vorgesehen, in die annähernd senkrecht je ein Zuschnitt umfassend optional Einschnitte aufweisen, wobei der jeweilige Zuschnitt die dritte Seitenwand und/oder als vierte Seitenwand von ausgebildeten Behältern ausbildet, wenn mindestens einer diese Zuschnitte optional mit Einschnitten in die länglichen Durchbrechungen der Anordnung eingesteckt werden. In einer weiteren Alternative können mindestens zwei Zuschnitte, bis mehrere Zuschnitte, insbesondere rechteckige Zuschnitte mit länglichen Ausnehmungen, insbesondere mit länglichen Ausnehmungen in regelmäßigen Abschnitten, so ineinandergesteckt werden, dass bei einer annähernden rechteckigen Anordnung der Zuschnitte sich annähernd rechteckige Hohlräume ausbilden. Die Zuschnitte und diese Anordnung ist beispielsweise bekannt, um Besteck in Besteckkästen in die Hohlräume sortieren zu können. Des Weiteren ist somit Gegenstand der Erfindung mindestens ein Behälter oder eine Anordnung von Behältern, insbesondere eine Vielzahl von Behältern in einer Anordnung, vorzugsweise von 2 bis 150 Behälter, besonders bevorzugt von 2 bis 20 Behältern, als steckbare Behälter, die aus mehreren Zuschnitten durch Zusammenstecken von Zuschnitten erhalten werden.

Verklebung der Behälter mittels Verkleben, insbesondere thermischen Verkleben, wie vorzugsweise mit Polycaprolacton.

Nach einer weiteren Ausführungsform ist es besonders bevorzugt, wenn das Material des flächig ausgebildeten textilen Gebildes umfasst Naturfasern umfassend Pflanzenfasern, Tierfasern, Regeneratfasern und/oder Gemische dieser. Besonders bevorzugt sind Naturfasern, die insbesondere nur mechanisch behandelt wurden und/oder mit keiner chemischen Umwandlungsreaktion unterworfen wurden, d.h. nicht chemisch behandelt wurden. Waschen mit Wasser und optional Seife gelten vorzugsweise nicht als chemische Behandlung. Regeneratfasern sind Faser natürlichen Ursprungs die aus nachwachsenden Rohstoffen aber mittels chemischer Prozesse hergestellt werden. Besonders bevorzugt sind jedoch Naturfasern, insbesondere Naturfasern, die nicht chemisch behandelt wurden, insbesondere nur mit Wasser gewaschen, und/oder mechanisch behandelt wurden. Des Weiteren ist es bevorzugt, wenn das Material des Gewebes, Gewirks, insbesondere Filz, Gestricks, Filzes oder Vliesstoffs, bevorzugt ist ein Vliesstoff, besonderes bevorzugt ein Nadelvliesstoff, Naturfasern umfassend Pflanzenfasern, Tierfasern und/oder Gemische davon.

Nach einer bevorzugten Ausführungsform ist Gegenstand der Erfindung ein Behälter, bei dem das Material des flächig ausgebildeten textilen Gebildes umfasst

50 bis 95 Gew.-%, insbesondere 60 bis 90 Gew.-%, Naturfasern, Regeneratfasern und/oder Gemische davon, und
5 bis 50 Gew.-%, insbesondere 10 bis 40 Gew.-%, i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser, und optional
0 bis 45 Gew.-%, insbesondere 1 bis 25 Gew.-%, mindestens eine biologisch abbaubare Folie und/oder Stützgitter, wobei die Folie oder das Stützgitter umfassen kann Diacetat, Cellulosediacetat, Stärke oder Mischungen dieser, wobei die Gesamtzusammensetzung des Materials des flächig ausgebildeten textilen Gebildes 100 Gew.-% umfasst.

Nach einer weiteren Ausführungsform ist Gegenstand der Erfindung ein Behälter, bei dem das Material des flächig ausgebildeten textilen Gebildes umfasst

50 bis 100 Gew.-%, insbesondere 50 bis 95 Gew.-%, bevorzugt 60 bis 90 Gew.-%, Naturfasern, Regeneratfasern und/oder Gemische davon, und
0 bis 50 Gew.-%, insbesondere 5 bis 50 Gew.-%, bevorzugt 10 bis 40 Gew.-%, i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser, und optional
0 bis 45 Gew.-%, insbesondere 1 bis 25 Gew.-%, mindestens eine biologisch abbaubare Folie und/oder Stützgitter, wobei die Folie oder das Stützgitter umfassen kann Diacetat, Cellulosediacetat, oder Mischungen dieser;
0 bis 45 Gew.-% anorganische Füllstoffe und/oder Hilfsstoffe, und optional
0 bis 25 Gew.-% Pflanzenstärkungsmittel oder Zusammensetzung von Pflanzenstärkungsmitteln (Stoffe und Gemische einschließlich Mikroorganismen), und optional
0 bis 25 Gew-% Pflanzenschutzmittel, und/oder
0 bis 25 Gew-% Dünger,
wobei die Gesamtzusammensetzung des Materials des flächig ausgebildeten textilen Gebildes 100 Gew.-% umfasst.

Nach einer weiteren Ausführungsform ist Gegenstand der Erfindung ein Behälter, bei dem das Material des flächig ausgebildeten textilen Gebildes umfasst

50 bis 100 Gew.-%, insbesondere 50 bis 95 Gew.-%, bevorzugt 59 bis 90 Gew.-%, Naturfasern, Regeneratfasern und/oder Gemische davon, und

0 bis 50 Gew.-%, insbesondere 5 bis 50 Gew.-%, bevorzugt 10 bis 40 Gew.-%, i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser, und eine oder mehrere der nachfolgenden Komponenten umfassend
1 bis 45 Gew.-%, insbesondere 1 bis 25 Gew.-%, anorganische Füllstoffe und/oder Hilfsstoffe, und/oder
1 bis 25 Gew.-%, insbesondere 1 bis 15 Gew.-%, Pflanzenstärkungsmittel oder Zusammensetzung von Pflanzenstärkungsmittel (Stoffe und Gemische einschließlich Mikroorganismen), und/oder
1 bis 25 Gew.-%, insbesondere 1 bis 10 Gew.-%, Pflanzenschutzmittel, und/oder
1 bis 25 Gew.-%, insbesondere 1 bis 10 Gew.-%, Dünger,
wobei die Gesamtzusammensetzung des Materials des flächig ausgebildeten textilen Gebildes 100 Gew.-% umfasst.

Nach einer weiteren bevorzugten Ausführungsform umfasst das Material des Behälters

- 90 bis 99,9 Gew.-% eines flächig ausgebildeten, textilen Gebildes, insbesondere Vliesstoff, besonders bevorzugt ist das flächig ausbildete, textile Gebilde gebildet aus einem Zuschnitt, insbesondere Zuschnitts einer Abwicklung des Behälters, zur Ausbildung des Behälters, wobei der Zuschnitt vorzugsweise mindestens einen Falz, perforierten Linie und/oder mindestens eine Prägekante aufweist, wobei der mindestens eine Falz, perforierte Linie und/oder Prägekante dazu ausgebildet sind, Kanten des Behälters auszubilden, wenn der Zuschnitt zu einem Behälter gefaltet ist,

wobei das Material des flächig ausgebildeten Gebildes umfasst
50 bis 100 Gew.-%, insbesondere 50 bis 95 Gew.-%, Naturfasern, Regeneratfasern und/oder Gemische davon, insbesondere Naturfasern, und
0 bis 50 Gew.-%, insbesondere 5 bis 50 Gew.-% i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser, insbesondere natürliche Wachse, und optional
0 bis 45 Gew.-% biologisch abbaubare Folie und/oder Stützgitter,
0 bis 45 Gew.-% anorganische Füllstoffe,
0 bis 25 Gew.-% Pflanzenstärkungsmittel oder Zusammensetzung von Pflanzenstärkungsmittel,
0 bis 25 Gew.-% Dünger,
wobei die Gesamtzusammensetzung des Materials des flächig ausgebildeten textilen Gebildes 100 Gew.-% umfasst, und

- 0,1 bis 10 Gew.-% Verbindungsmittel, insbesondere umfassend Zusammensetzungen zur Verbindung, wie Klebstoff(e) und/oder mechanische Verbindungsmittel, wie metallische oder natürliche mechanische Verbindungsmittel und/oder natürliche Klebstoffe.

Nach einer weiteren Alternative weist der Behälter im einseitigen Kontakt mit einem Substrat, insbesondere mit Substrat im Hohlraum des Behälters, eine Mindesthaltbarkeit von 8 Wochen auf. Gleichzeitig ist der Behälter in der Natur biologisch abbaubar. Nach einer weiteren bevorzugten Alternative ist der Behälter aus dem Zuschnitt gefertigt und kann flach zusammengelegt werden und, insbesondere kurz vor dem Gebrauch zum Behälter aufgefaltet werden.

Nach einer weiteren Ausführungsform weist das Behältnis mit Hohlraum zur Aufnahme von Saatgut mit mindestens einer Seitenwand, vorzugsweise vier bis acht Seitenwände auf, und zumindest teilweise einen Boden, wobei das Behältnis gebildet ist aus einem flächig ausgebildeten, textilen Gebilde eines Zuschnitts, insbesondere einer Abwicklung des Behälters umfassend mindestens eine Seitenwand und teilweise ausgebildeten Boden und optional von Biegezugabe(n), und optional Verbindungsmittels eines Zuschnitts zur Ausbildung des Behälters, vorzugsweise wobei der Zuschnitt mindestens einen Falz, einer perforierten Linie und/oder Prägekante aufweist, wobei der mindestens einen Falz, perforierte Linie und/oder Prägekante dazu ausgebildet ist, Kanten des Behälters auszubilden, wenn der Zuschnitt zu einem Behälter gefaltet ist. Der Zuschnitt ist vorzugsweise ein faltbarer Zuschnitt zur faltenden Herstellung des Behälters, insbesondere des Faltbehälters. Gegenstand der Erfindung ist somit auch ein durch Faltung eines Zuschnitts des Behälters erhältlicher Behälter, insbesondere Faltbehälter oder gefalteter Behälter. Der Behälter weist vorzugsweise eine erfindungsgemäße Biegesteifheit auf. Mechanische Verbindungmittel können umfassten eine Öffnung und ein darin verhakbares Verbindungsmittel.

Gegenstand der Erfindung ist auch ein Behälter, insbesondere gefalteter Behälter oder Faltbehälter, erhältlich aus einem faltbaren Zuschnitt eines textilen flächigen Gebildes zur Ausbildung des Behälters optional mit Biegezugabe(n) mit einer Biegesteifheit von größer gleich 950 mN•cm. Der erfindungsgemäße Behälter ist bevorzugt ein Anzuchtbehälter, bevorzugt ein gefalteter Anzuchtbehälter.

Ein Behälter aufweisend einen Hohlraum aufweisend mindestens eine Seitenwand kann gebildet sein als eine Rotationskörper, insbesondere als hohler Kegelstumpf, wobei die kleinere Deckfläche unten am Behälter angeordnet ist und die größere Grundfläche als obere Öffnung angeordnet wird. Ebenfalls kann der Behälter eine allgemeine zylindrische Form aufweisen, wobei vorzugsweise eine prismatische Form oder kreiszylindrische Form des Behälters bevorzugt ist. Die Behälter können ohne Boden, mit teilweisem Boden oder mit Boden und optional mit zusätzlichen Öffnungen im Boden ausgebildet sein.

Vorzugsweise weist eine Seitenlänge einer unteren Grundfläche oder ein Durchmesser einer unteren Grundfläche eines Behälters im Verhältnis zur Höhe das folgende Verhältnis von 1 : 2 bis 1 : 15, insbesondere von 1 : 2 bis 1 : 10, auf. Besonders bevorzugt sind 1 cm bis 10 cm zu 2 cm bis 50 cm, besonders bevorzugt sind 2 bis 5 cm Seitenlänge oder Durchmesser zu 14 bis 20 cm Höhe des Behälters.

Der Behälter weist vorzugsweise eine Höhe von größer gleich 10 cm, bevorzugt von größer gleich 14 cm, insbesondere bis 25 cm auf, und optional einen Durchmesser von größer gleich 1 cm bis 40 cm oder eine Breite und Tiefe der Seitenwände des Behälters von 1 cm bis 40 cm, jeweils bevorzugt von größer gleich 3 cm bis 30 cm, weiter bevorzugt von größer gleich 3 cm bis 15 cm, auf. Entsprechend einer besonders bevorzugten Ausführungsform ist der Behälter ein faltbarer Behälter, der aus einem faltbaren Zuschnitt mit definierter Biegesteifheit hergestellt werden kann oder herstellbar ist.

Des Weiteren kann es bevorzugt sein, wenn der Behälter aus einem flächigen textilen Gebilde geformt werden kann, indem das flächige textile Gebilde in einer Form umfassend eine Positiv-Form und eine Negativ-Form unter Einwirkung von Hitze und/oder Feuchte in eine dreidimensionale Form gepresst wird. Auf diese Weise können beispielsweise mindestens zwei Halbschalen geformt werden, die sodann an den Kanten zu einem Behälter verbindbar sind. Die Halbschalen können auch kontinuierlich zwischen zwei umlaufenden kreisförmigen Postitiv- und Negativformen geformt und optional zugeschnitten werden. Die Zuschnitte können zu den Behältern verbunden werden. Gegenstand der Erfindung ist auch ein Behälter aus Vliesstoff, der in eine Form geprägt wird und/oder ein dreidimensional geprägtes Formteil aus Vliesstoff zur Herstellung eines Behälters unter Verwendung einer mindestens zweiteiligen Form umfassend eine dreidimensionale Innen- und Außenform, wobei die Innenseite der Außenform die Kontur der Außenseite des Formteils bestimmt und die Innenform die Innenform die Kontur der Innenseite des Formteils bestimmt. Insbesondere ein vorstehendes Formteil zur Herstellung von Behältern zur Keimung von Samen von Pflanzen mit Pfahlwurzeln. Gegenstand der Erfindung ist auch ein abgerollter Zuschnitt eines flächigen textilen Gebildes zur Herstellung des Behälters, insbesondere zur Herstellung eines Behälters, der zur Keimung von Samen von Pflanzen mit Pfahlwurzeln geeignet ist.

Nach einer Alternative kann der Behälter nahezu zylindrisch, vorzugsweise kreiszylindrisch ausgebildet sein. Dazu kann der Zuschnitt im Wesentlichen einem Rechteck entsprechen, wobei insbesondere an einer der kurzen Kanten des Rechteckes ein nahezu kreisförmiger Zuschnitt zur Ausbildung des Bodens oder eine eher rechteckige Lasche zur Ausbildung des teilweisen Bodens vorgesehen sein kann. Der zylindrische Behälter kann geformt werden, indem die langen Kanten des rechteckigen Zuschnitts miteinander verbunden werden. Dies ist möglich durch Anbringen von Knoten, Naht oder mechanischen Verbindungsmitteln und/oder stofflichen Verbindungsmitteln, wie Klebstoff. Insbesondere wird der Biegezugabe.

Ferner ist Gegenstand der Erfindung ein Behälter, der geeignet ist als Anzuchtbehälter von Saatgut zum Keimen und zum Wachsen von Forstgehölzen wie Sämlingen. Das Flächengewicht des Gebildes des Behälters, insbesondere des Vlieses, beträgt vorzugsweise von 200 bis 1000 $g/m^2$, insbesondere von 350 bis 800 $g/m^2$, bevorzugt von 350 bis 550 $g/m^2$, besonders bevorzugt von 200 bis 500 $g/m^2$. Alternative bevorzugt beträgt das Flächengewicht 400 $g/m^2$ mit plus/minus 100 $g/m^2$, bevorzugt von 50 $g/m^2$. Nach einer weiteren Ausführungsform ist es bevorzugt, wenn der Behälter, insbesondere das textile Gebilde des Behälters, mit einer biologisch abbaubaren Folie oder einem Gitter zur Versteifung des Gebildes ausgerüstet ist, die insbesondere umfasst Cellulosediacetat und/oder Maisstärke.

Des Weiteren ist es besonders bevorzugt, wenn der Behälter, insbesondere das flächige textile Gebilde des Behälters eine Biegesteifheit (mN•cm) bestimmt nach EN ISO 9073-7 : 1995 (Cantilever-Methode) von größer gleich 950 mN•cm aufweist, insbesondere weist das Gebilde eine Biegesteifheit von 950 mN•cm bis 2500 mN•cm auf. Zu steif soll das Gebilde nach einer Ausführungsform nicht sein, um den Wurzeln die Möglichkeit zu geben das Gebilde zu durchdringen.

Ebenso Gegenstand der Erfindung ist die Verwendung eines Behälters als Anzuchtbehälter für Samen, Saatkorn, Nußfrucht und/oder Keimlingen von Pflanzen, insbesondere Samen und/oder Keimlingen von Forstgehölzen. Als Forsthölzer gelten Laubbäume, wie Eiche, Buche, Kastanie, Esche, Obstbäume, Kirsche, und Nadelbäume wie Nordmanntanne, Kiefer, Tanne und Fichte. Pfahlwurzler gelten Eiche, Buche, Kastanie, Esche, Kirsche, und Nadelbäume wie Nordmanntanne, Kiefer, Tanne und/oder Fichte. Des Weiteren gelten Rosen als Pfahlwurzler.

Gleichfalls Gegenstand der Erfindung ist ein Kit umfassend mindestens zwei Behälter, insbesondere zwei bis 100 Behälter, und ein Trägersystem zur Aufnahme der mindestens zwei Behälter. Das Trägersystem zur Aufnahme der mindesten zwei Behälter umfasst in einer Alternative ein Gitter mit einem Ständer, insbesondere zur Beabstandung des Gitters von einer Auflagefläche oder das Trägersystem ist ein Behälter mit einer Vielzahl an Aufnahmen, wobei eine Aufnahme zur Aufnahme und vertikalen Ausrichtung je eines Behälters ausgebildet ist. Vorzugsweise weist das Trägersystem einen für Wasser durchlässigen Boden oder Ablaufrinne(n) auf, um Staunässe zu vermeiden.

Das Trägersystem kann eine Platte mit einer Vielzahl an Anzuchtgefäßen umfassen sowie alternativ oder kumulativ ein Gitter mit Öffnungen in denen die Behälter eingefügt werden können. Bei Verwendung eines Gitters ist es bevorzugt, wenn die Behälter aufgrund ihre nach unten enger zulaufenden Ausformung mit dem oberen breiter ausgeführten Ausformung in einer Position im Gitter aufliegen. Die Behälter können spitz zulaufend, konischen oder seitenverkehrt kegelstumpfartig ausgebildet sein.

Als Naturfasern gelten Fasern aus natürlichen Quellen, wie Pflanzen und von Tieren, die optional mechanisch behandelt wurden. Chemisch behandelte Naturfasern gelten nicht mehr als Naturfasern. Auch Holzfasern gelten zweckmäßig nicht als Naturfasern. Regeneratfasern sind Fasern, die aus natürlich vorkommenden, nachwachsenden Rohstoffen über chemische Prozesse hergestellt werden. Dabei handelt es sich vor allem um Zellulosederivate aus Holz. Naturfasern können umfassen Reisschalen oder Bestandteile davon, da diese als Quelle von Kieselsäuren und Lignin gelten.

Naturfasern können zudem umfassen Samenfasern, Bastfasern und/oder Hartfasern, umfassen Rohrkolben, Wollgras-Wolle, Hopfen, Leinen, Pampasgras, Kakteen, Weizen, Birke, Gras, Kokos, Palme, Agave und/oder Mischungen umfassend mindestens zwei der vorgenannten Fasern.

Der Definition nach besteht ein Faltbehälter aus einem Zuschnitt mit einer durch Verbindung, insbesondere Laschenklebung, Drahtheftung, oder Klebestreifen verbundenen Kante mit Boden. Faltbehälter werden können an Kunden flach zusammengefaltet versandt werden. Sie sind direkt gebrauchsfertig und in zahlreichen Varianten verfügbar. Die verschiedenen Typen von Faltbehältern als Anzuchttopf unterscheiden sich hauptsächlich durch die Breite, Tief und optional den Maßen der Grundfläche. Die Grundfläche kann vorzugsweise von 1 cm x 1cm bis 40 cm bis 40 cm variieren, bevorzugt von 2 cm x 2cm bis 25 cm x 25 cm.

Die erfindungsgemäßen Behälter erlauben zudem eine einfache Anpassung der Behälter an individuelle Kundenvorgaben, indem lediglich der Zuschnitt synonym zu Schnittmuster des Behälters angepasst wird.

Verbindungsmittel, insbesondere umfassend Zusammensetzungen zur Verbindung, wie Klebstoff(e) und/oder mechanische Verbindungsmittel, können umfassen biologisch abbaubare Klebstoffe, insbesondere natürliche Klebstoffe, wie Baumharze, Kolophonium, Kohlenwasserstoffharze, Stärke, Naturkautschuk, Polycaprolacton (PCL) oder biologisch vollständig abbaubare Polymere.

Mechanische Verbindungsmittel können umfassen metallische Klammer, Nieten, Knoten und/oder Nähte.

Pflanzenstärkungsmittel können umfassen Mikroorganismen, wie Pilze, nitrifizierende Bakterien, wie Agrobacterium pusense, Paenibacillus mucilaginosus, Algen, Algenextrakte, sowie weitere dem Fachmann bekannte übliche Pflanzenstärkungsmittel. Pflanzenstärkungsmittel können umfassen Mikroorganismen, die ausschließlich dazu bestimmt sind, allgemein der Gesunderhaltung der Pflanzen zu dienen oder dazu bestimmt sind, Pflanzen vor nichtparasitären Beeinträchtigungen zu schützen, also zum Beispiel vor Hitze, Trockenheit, Kälte, Stress durch Pflanzenschutzmaßnahmen, Umpflanzungen oder Ähnliches. Pflanzenstärkungsmittel können außerdem nicht Pflanzenschutzmittel sein. Die Pflanzenstärkungsmittel bzw. Biostimulanzien können mittels Sprühauftrag aufgetragen werden. Der Anwender kann den Behälter aus dem textilen Gebilde auch selbst mit Pflanzenstärkungsmittel ausrüsten.

Anorganische Füllstoffe, organische Füllstoffe und/oder Hilfsstoffe umfassen Kieselsäure, Siliziumdioxid, Schichtsilikate, Bentonit, Graphit, Pflanzenkohle sowie weitere dem Fachmann bekannte Füllstoffe und/oder Hilfsstoffe.

Pflanzenschutzmittel können beispielsweise umfassen Phosphonate. Der Anwender kann den Behälter aus dem textilen Gebilde auch selbst mit Pflanzenschutzmittel ausrüsten.

Dünger können umfassen natürlichen Dünger und/oder mineralischen Dünger. Des Weiteren kann der Dünger Einzel- oder Mehrnährstoffdünger umfassen. Der Dünger kann schnellfreisetzend oder retardiert freigesetzt werden. Dabei ist eine Kunststoffumhüllung nur mit bioabbaubarem Polymeren gemäß der Erfindung sinnvoll. Übliche Dünger umfassen Harnstoff, Nitrate, Kalium-Salze, Phosphate, Kalke, Komposte, Hornspäne, organische Dünger aus Pflanzenteilen, Stallmist, Gülle, Gärreste, Stroh, Kompost, sowie Mineraldünger umfassend Oxide, wie MgO, $MgSO_4$, $MgCO$s sowie Sulfate, Cloride und Carbonate.

Nachfolgend wird die Erfindung anhand von Ausführungsbeispielen erläutert, ohne, dass diese Beispiele die Erfindung auf diese exemplarischen Beispiele beschränken soll.

Zur Herstellung des Hanfvlieses oder Flachsvlieses wurden Fasern als Grundmaterial mit den folgenden Parametern verwendet:

Faserfeinheit: Hanf (dtex: 143,6, V der Feinheit: 33,2 %), Flachs (dtex: 54,1, V der Feinheit 59,6 %) gemäß DIN EN ISO 1973:1995-12. Faserlänge: Hanf (47,9 mm, V der Länge: 98,4), Flachs (62,4 mm, V der Länge: 70,4 %) gemäß DIN EN ISO 5079. Bestimmt wurde eine feinh. Bz. Reißkraft (cN/tex) 46,75 für Hanf und 34,03 für Flachs sowie eine Zugfestigkeit (MPa) von 701,25 (MPa) für Hanf und 510,45 (MPa) für Flachs. V der Reißkraft betrug für Hanf 54 % und für Flachs 46 %.

Es wurde ein Hanfvlies hergestellt und mit Carnaubawachs beschichet. Herstellung des Hanfvlieses mit einem Flächengewicht von 400 g/m² und vernadelt.

Carnaubawachs (Schmelztempratrur (ST) = 90 °C)
Reiswachs (ST = 90 °C)
Rapswachs (ST = 65 °C)
Hydriertes Rizinusöl (ST = 85 °C).

Biegesteifheit mit Carnaubawachs (81 Gew.-% Hanf und 19 Gew.-% Carnaubawachs) verbunden mit 4 verzinkten Tackerklammern (0,2 g).

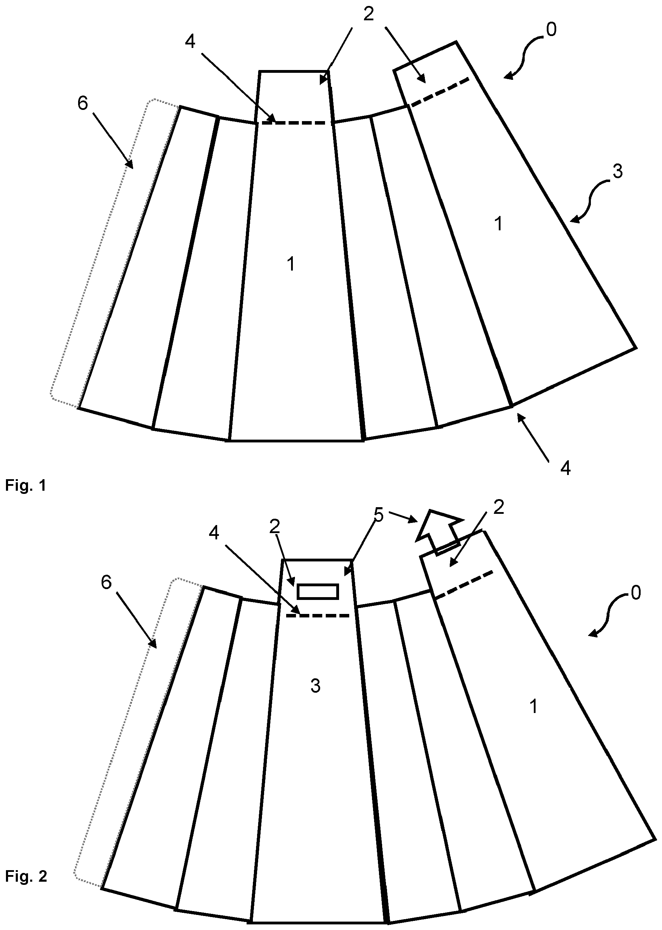

Die **Figuren 1** und **2** zeigen einen abgewickelten Zuschnitt **3** eines besonders bevorzugten Behälters **0** mit ein Seitenflächen **1,** Boden **2** und Biegekante **6** zur Verwendung als Anzuchttopf für Forsthölzer. Des Weiteren sind Falze, perforierte Linien bzw. Prägekanten **4** dargestellt, die im gefalteten Zustand Kanten des Behälters **0** ergeben. Zudem sind mechanische Verbindungsmittel **5** in Form eines Schlitzes und eines in dem Schlitz verhakbaren Pfeiles dargestellt. Der Zuschnitt ergibt einen Behälter mit den folgenden Abmessungen:

Zuschnitt des Behälters:

Öffnung oben (Breite x Tiefe):   5 cm x 5 cm
Boden unten (Breit x Tiefe):   3,5 cm x 3,5 cm
Kantenlänge (Höhe):   16 cm

Öffnungen/Schlitze im Boden und den Seiten zur besseren Duchwurzelung

Die Vliesbahn wurde bepulvert und anschließend wurde das Wachs geschmolzen. Herstellung: Einseitig mit Pulver bestreut, Auftragsmenge 10 Gew.-% vom Vliesgewicht.

Hotmelt: Aufschmelzen der Wachse und anschließender Schmelzauftrag (Hotmelt), wenn Wachse als Granulat oder Pellets verfügbar.

Thermofixanlage: 1 m/min, 100 °C
Spaltabstand: 1 mm Heizzone, 0,07 mm Kühlzone

**Tabelle 1:** Alternative Vliese mit Wachsbeschichtung oder Folie (Die Prozentangaben in Prozent sind ist in Gew.-%)

| Variante | Funktionsmaterial | | | |
|---|---|---|---|---|
| | Fasern | Folie | Binder | Nahtverbinder |
| 1 | 75% Hanf | 25% Cellulosediacetat-Folie | - | kein |
| | Vlies 400 g/m² | 100 μm Cellulosediacetat-Folie | | Fremdmaterial |
| | | Außenseite 131,6 g/m² | | |
| 2 | 91% Hanf | - | 9% Carnauba | 4 Tackerklammern |
| | Vlies mit 400 g/m² | | | 0,2 g |
| 3 | 81 % Hanf | - | 19% Carnauba | 4 Tackerklammern |
| | Vlies mit 400 g/m² | | | 0,2 g |
| 4 | 80 % Hanf | - | 20% Carnauba | 4 Tackerklammern |
| | Vlies mit 400 g/m² | | | 0,2 g |
| 5 | 62 % Hanf | - | 38% Rapswachs | 4 Tackerklammern |
| | Vlies mit 400 g/m² | | | 0,2 g |

Methode: Saugfähigkeit (ISO 9073-6 (21/2000), Flüssigkeits-Absorbierzeit und Flüssigkeits-Absorbierungsvermögen.

Vliesstück: 100 x 100mm; Testmedium: destilliertes Wasser; Fotoschale, Füllhöhe = 23 mm Probenhalter aus Vogelschutzgewebe (110 x 120mm) doppelt aneinandergenäht; mittels 4 Klammern wird Probenkörper auf dem Probenhalter fixiert, für 60s auf den Boden der Fotoschale gelegt und anschließend 120s frei hängend abgetropft.

Tabelle 2: Wasseraufnahmefähigkeit und Saugfähigkeit

| | Wasseraufnahme [%] | Untersinkzeit 5 g [s] |
|---|---|---|
| 100 Gew.-% Hanfvlies 400 g/m$^2$ ohne Beschichtung | 376,8 | 429 |
| zusätzlich Cellulosediacetafolie 100 Mikrometer (glatt) | 38,5 | 1289 |
| zusätzlich Cellulosediacetafolie 100 Mikrometer (perforiert) | 40,6 | 1570 |
| zusätzlich Cellulosediacetafolie 100 Mikrometer (gedochet) | 59,2 | 1364 |
| zusätzlich Kaschierung mit 65 g/m$^2$ Carnaubawachs (12 Gew.-%) | 21,1 | 5400 |
| zusätzlich Kaschierung mit 272 g/m$^2$ Rapswachs (38 Gew.-%) | 50,5 | 175 |

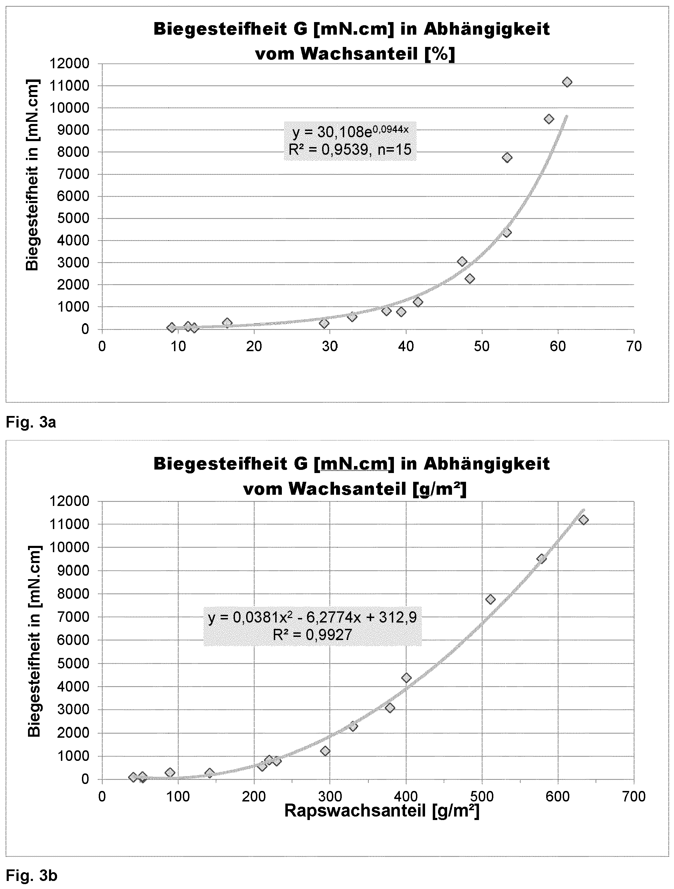

Die **Figuren 3a und 3b** stellen dar, die Bestimmung der Biegelänge nach EN ISO 9073-7 : 1995 (Cantilever-Methode, Figur 3a: $y = 30,108e^{00944x}$, $R^2 = 0,9539$, $n = 15$, Figur 3b: $y = 0,0381x^2 - 6,2774x + 312,9$, $R^2 = 09,9927$) eines Gebildes aus Hanf-Vliesstoffes mit Rapswachs Kaschierung und einem Flächengewicht von 400 g/m$^2$ zur Bestimmung der Biegesteifheit G [mN•cm]. Die Biegesteifheit wird bestimmt anhand DIN 53121 an Proben der Abmessungen 50x30 cm. Die Biegesteifheit wird bei 20 °C und 60 bis 65% Luftfeuchtigkeit ermittelt.

Mit Rapswachs wird ein Anteil von ca. 38 Gew.-% bei einem Gesamtflächengewicht von 400 g/m$^2$ benötigt, um eine Biegesteifheit von größer gleich 1000 [mN•cm] zu erhalten. Dies entspricht etwa einem Wachsmenge von 245 g/m$^2$ bei einem Flächengewicht von 400 g/m$^2$ bei einem Hanfvlies. Bei einem Flächengewicht von 300 g/m$^2$ werden ca. 58 Gew.-% Rapsanteil für eine Biegesteifheit von 1000 [mN•cm] benötigt.

Bei Verwendung von Hanfvlies (Flächengewicht Hanfvlies 400 g/m$^2$) mit Carnaubawachs, ist eine Auftragsmenge von etwa 19 Gew.-% Carnaubawachs und 81 Gew.-% Hanfvlies ausreichend, um eine Biegesteifheit von größer gleich 1000 [mN•cm] zu erhalten. Carnaubawachs ist das härteste bekannte natürliche Wachs. Das Hanfvlies wurde einseitig mit Carnaubawachs kaschiert. Auf diese Weise ist kann die Außenseite des Gebildes des Behälters glatt und versiegelt hergestellt werden, wobei die Innnenseite des Behälters noch faserig und offenporig ist.

Das Material des Behälters, insbesondere das Material des flächigen textilen Gebildes, ist kompostierbar bzw. vollständig aerob bioabbaubar sind nach DIN EN ISO 17556:2019-09 (ISO 17556:2019) bzw. in der deutschen Fassung.

Die zu untersuchenden Materialien werden in feuchter Erde in einer Messzelle gelagert und der Sauerstoffbedarf über einen Zeitraum von 6 Monaten ermittelt.

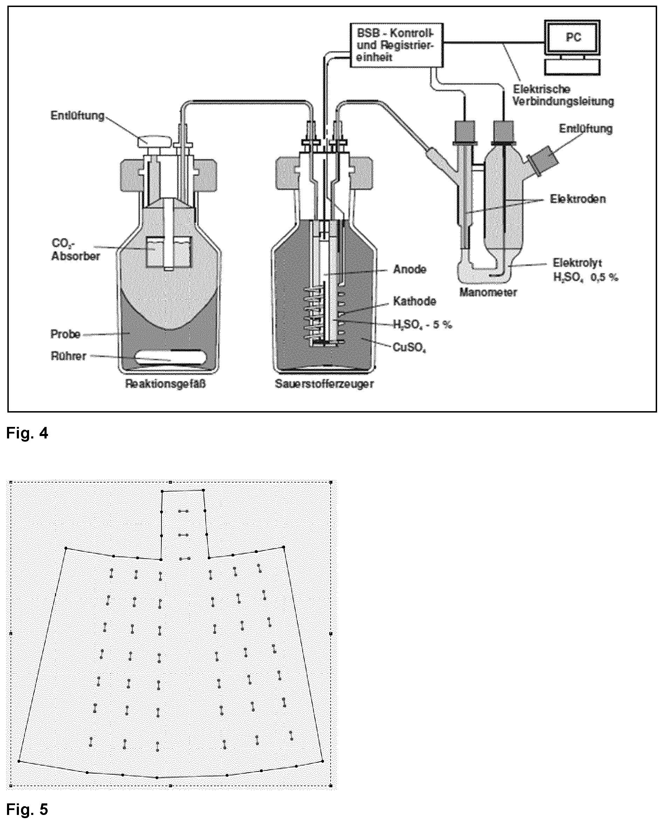

Die Bioabbaubarkeitsstudie wird anhand der Bestimmung des biologischen SauerstoffBedarfs (BSB) mittels des BSBdigi Respirometers ermittelt. Der Versuchsaufbau ist in Figur 4 dargestellt.

"Bioabbaubarkeit" bedeutet, dass sich ein Material nach einer definierten Zeit unter definierten Temperatur-, Sauerstoff- und Feuchtebedingungen bei Anwesenheit von Mikroorganismen oder Pilzen zu mehr als 90% zu Wasser, $CO_2$, und mineralischen Salzen jeglicher sonstiger vorliegender Elemente sowie neuer Biomasse abgebaut haben muss. Der biochemische Sauerstoffbedarf (BSB) nimmt unter den Gewässergüteparametern eine wichtige Stellung ein, da er weitgehend der in Vorflutern oder Abwasserreinigungsanlagen vorkommenden biochemischen Oxidation organischer Substanzen entspricht. In den Gewässern und Reinigungsanlagen werden die organischen Substanzen durch eine Stoffwechseltätigkeit der Bakterien oxidativ abgebaut. Die Sauerstoffmenge, die für diese biochemische Oxidation der organischen Substanzen notwendig ist, wird als BSB definiert. Zur Abschätzung der aeroben Abbaubarkeit dienen sogenannte Respirometer - automatisierte Geräte zur kontinuierlichen Messung des Gasstoffwechsels von Mikroorganismen in einem geschlossenen System, allgemein bekannt unter der Bezeichnung Biologischer Sauerstoff-Bedarf (BSB). Dieser Biologische Sauerstoff-Bedarf gibt Auskunft über den Energieumsatz beim Abbau einer Probe (durch die Umwandlung von organischer Substanz in zum größten Teil Wasser und Kohlenstoffdioxid). So lassen sich im Respirometer Abbaugeschwindigkeiten messen, die an den Abbau unter realen Bedingungen angelehnt sind.

Eine Messeinheit umfasst nach Figur 4 (Messprinzip und Aufbau) je ein Reaktionsgefäß mit integriertem $CO_2$-Absorbergefäß, einem Sauerstofferzeuger und einem Druckindikator. Die durch Schläuche miteinander verbundenen Gefäße bilden eine abgeschlossene Messeinheit, unabhängig von Schwankungen des Luftdruckes der Erdatmosphäre. Es wird nach dem manostatischen Prinzip gearbeitet. Durch die Mikroorganismentätigkeit in der Probe entsteht ein Unterdruck, auf den das Manometer anspricht. Er steuert die elektrolytische Sauerstofferzeugung - es wird die Sauerstoffmenge gemessen, die nachgeliefert werden muss, um bei gleichbleibendem Volumen den Druck im System konstant zu halten. Im Reaktionsgefäß wird die Probe durch einen Magnetrührstab intensiv durchgemischt, so dass sie stets Sauerstoff bis zur Sättigung aufnehmen kann. Das bei der Veratmung entstehende $CO_2$ wird vom Absorber gebunden.

Der Sauerstofferzeuger arbeitet nach dem coulombmetrischen Verfahren, d.h. nach dem Faradayschen Gesetz ist die durch einen elektrischen Strom elektrolytisch abgeschiedene Stoffmenge nur von der Strommenge abhängig. Also nur von der Stromstärke und der Zeit. Die Elektrolysezelle ist so ausgelegt, dass bei einem Stromfluss von 100,4 mA in 3 s (Takt 1/10 BSB) 0,025 mg Sauerstoff absolut bzw. 0,1 mg/l $O_2$ produziert wird. (Einheit basierend auf einem Probenvolumen von 250 ml). Die Taktrate kann der Aktivität der Probe angepasst werden - auf 1/10 (3 s); ½ (15 s); 1 (30 s) und 2 (60 s) BSB- Einheiten pro Takt. Als Standardeinstellung wird ein Takt von 3 sec vorgegeben. Um 1 BSB-Einheit zu erreichen wird die Taktzeit (Stromfluss) auf 30 s verlängert und somit die produzierte Sauerstoffmenge pro Takt auf 0,25 mg gesetzt.

Wenn dies der Fall ist, zählt das System 1 Einheit. Die gezählten Einheiten entsprechen somit den produzierten Mengen an Sauerstoff in mg/l. Die Summe aller BSB-Werte wird per Software pro Messzelle addiert und gespeichert. Im Sauerstofferzeuger wird Kupfersulfat als Elektrolyt verwendet, dadurch können sich außer Sauerstoff keine weiteren Gase entwickeln. Im gesamten Messsystem - Reaktionsgefäß, Sauerstofferzeuger, Kontaktmanometer - herrscht ein von äußeren Luftdruckschwankungen unabhängiger Druck.

Die Druckschwankungen (absolut) bzw. die maximale Schaltdifferenz durch das Kontaktmanometer beträgt ca. ± 2 mm Wassersäule (konstante Temperaturumgebung). Durch diese hohe Druckkonstanz sind die im Messgefäß befindlichen Organismen keiner Stressbelastung ausgesetzt. Von besonderer Wichtigkeit ist ein temperaturadaptierter Probeansatz bei konstanter Temperaturumgebung 20 °C (± 0,5°C) sowie exakte Probenmengen.

Die Messungen liefen nach bereits bestehenden Normen und Vorschriften zur Bestimmung der vollständigen aeroben Bioabbaubarkeit von Kunststoff-Materialien in einem wässrigen Medium (auf Basis der DIN EN ISO 14851-Bestimmung der vollständigen aeroben Bioabbaubarkeit von Kunststoff-Materialien in einem wässrigen Medium - Verfahren mittels Messung des Sauerstoffbedarfs in einem geschlossenen Respirometer). Es ist zu bedenken, dass in diesem Zusammenhang die im Respirometer gemessenen Abbaugeschwindigkeiten nur einen Hinweis auf den prinzipiellen Verlauf unter realen Bedingungen geben kann.

Die Untersuchung der Proben erfolgte in der Art, dass diese zunächst in ein wässriges synthetisches Medium - das sogenannte Inokulum - eingesetzt werden. Als Inokulum wird hierbei ein wässriges Eluat (aus der Kläranlage) mit entsprechenden Mikroorganismen genutzt. Somit stellt die Prüfsubstanz die einzige Kohlenstoff-Quelle dar.

Der Ablauf der Prüfung, nochmals kurz zusammengefasst, geht mit den folgenden Punkten einher:

1. Das mit den Mikroorganismen beimpfte Wasser einschließlich der zu untersuchenden Probe wird in einem geschlossenen Respirometer gerührt.

2. Durch den mikrobiellen Abbau entsteht Kohlenstoffdioxid und gleichzeitig wird dabei Sauerstoff verbraucht.

3. Das gebildete Kohlenstoffdioxid bindet an einem geeigneten Absorber (in diesem Fall Calciumchlorid) und wird nicht detektiert.

4. Durch den Sauerstoffverbrauch fällt der Druck im geschlossenen System ab. Über die apparative Konstruktion des Sapromats wird im Laufe des Versuchs immer so viel Sauerstoff nachgeliefert, wie zum Druckausgleich notwendig ist. Die dafür benötigte Sauerstoff-Masse wird gemessen und aufgezeichnet.

Zur Prüfung auf vollständige biologische Abbaubarkeit wird der Sauerstoffverbrauch über den gesamten Zeitraum des biologischen Abbaus beobachtet. Der jeweils um den Blindwert (Eigenverbrauch der Lösung) korrigierte Sauerstoffverbrauch gibt somit Auskunft über den Abbauverlauf der untersuchten Probe.

Die am Respirometer angezeigte Zahl wird BSB-Einheit genannt. Aus dieser lässt sich nach Angaben des Geräteherstellers die Menge an Sauerstoff nachfolgender Gleichung berechnen:

1 BSB-Einheit = 0,25 mg $O_2$

Die daraus resultierende Berechnung des biologischen Sauerstoffverbrauchs ohne Berücksichtigung der Nitrifikation erfolgt nach der Formel:

$$B_{sp} = (B_t - B_{bt}) / m_{Probe}$$

mit

$B_{sp}$ = spezifischer biochemischer Sauerstoffverbrauch in mg $O_2$ je mg Prüfmaterial

$B_t$ = biochemischer Sauerstoffbedarf zurzeit t in Behältern, die Prüfmaterial enthalten in mg $O_2$

$B_{bt}$ = biochemischer Sauerstoffbedarf zurzeit t in der Blindprüfung in mg $O_2$

$m_{Probe}$ = eingesetzte Masse des Prüfmaterials im Medium in mg

Das Ergebnis welches durch den Zusatz von Glucose erhalten wird, ist als "innerer Standard" anzusehen. Dabei ergibt sich der folgende theoretische Zusammenhang:

$$C_6H_{12}O_6 + 6O_2 \rightarrow 6CO_2 + 6H_2O$$

1 mol = 180 g $C_6H_{12}O_6$ verbrauchen für die vollständige Oxidation 6 mol = 192 g $O_2$, das heißt 1 g Glucose verbraucht bei vollständigem Abbau 1,07 g Sauerstoff, allerdings ohne Berücksichtigung anderer Prozesse wie zum Beispiel Nitrifikation

Für die Versuche im Respirometer wurde jeweils 1 g der untersuchten Proben (zweimal als Doppelbestimmung) in das Probengefäß überführt und anschließend entsprechend der Versuchsbestimmungen die Prozedur vollzogen.

Hanfvlies unbeschichtet und mit Wachs beschichtet wurde nach der BSB Methode untersucht.

Beispiele Pflanztöpfe:

**Beispiel 1**

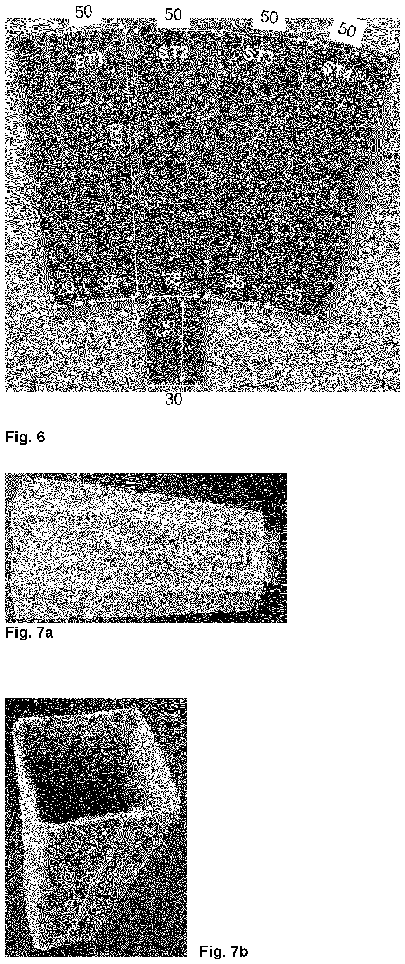

Ein Pflanztopf zur 8-wöchigen Anzucht von Stieleichen wurde aus einem Grundnadelvlies aus 100% Rösthanf mit einer Flächenmasse von 400 g/m², einer einseitigen Vernadelung mit 30 Stichen/cm² bei Einsatz der Filznadel GrozBeckert 15X18X36X3 M333 G 3417 gefertigt. Zur Materialversteifung und Verzögerung der biologischen Abbaubarkeit wurden einseitig 250 g/m² Rapswachs Candle Blend EVO mit einer Temperatur der Wachsschmelze von 100°C im Hotmeltauftrag mit 2 m/min kontinuierlich mit einer HIP-MITSUI-Anlage auf die Hanfvliesbahn aufgetragen. Anschließend erfolgte der Zuschnitt der einzelnen Pflanztopfgrundflächen mit einem Flachbettcutter der Fa. Bullmer bei Einsatz folgenden Schnittbildes: **Figur 5** zeigt ein Schnittbild für den Flachbettcutter mit einer Gesamtfläche von 323,5 cm². **Figur 6** zeigt einen Zuschnitt für einen Pflanztopf mit Abmaßen (ST ... Seitenteil) für eine Höhe von 16 cm und einer späteren 3D-Fixierung mittels Überlappungsnaht als Biegezugabe. Die Seitenteile 1 und 3 wurden als spätere Knickkante mittige zusätzlich perforiert, um den konfektionierten Pflanztopf platzsparend in einer flachen Form zu transportieren. Nach dem Zuschneiden erfolgte das Konfektionieren durch 3D-Faltung und Verbinden einer Längsüberlappung sowie eines Überlappungsbereichs für den Boden mit 4 vernickelten Tackerklammern. Die **Figuren 7a** und **7b** zeigen einen konfektionierter Pflanztopf in flacher Transportform mit Seitennahtverbindung und Bodenbefestigung mittels 4 vernickelter Tackerklammern sowie einen Pflanztopf aufgefaltet, bereit für die Befüllung mit Erdsubstrat und Baumsamen

**Beispiel 2**

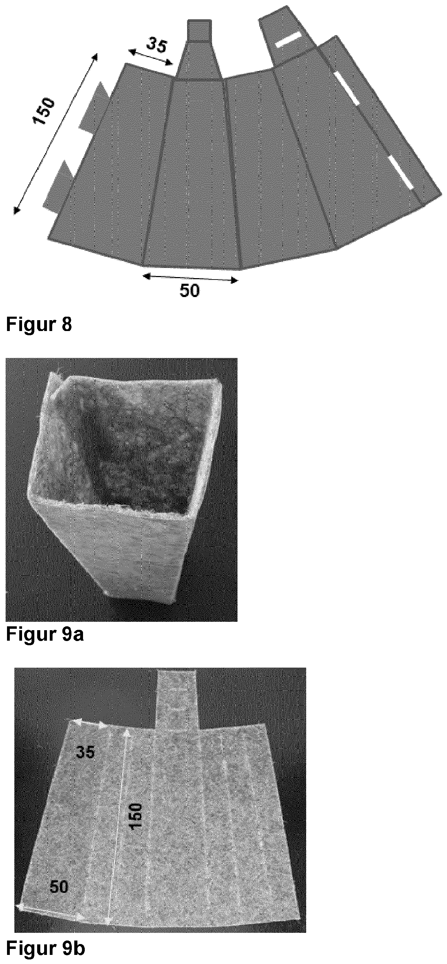

Ein Pflanztopf zur 8-wöchigen Anzucht von Stieleichen wurde aus einem Grundnadelvlies aus 100% Rösthanf mit einer Flächenmasse von 400 g/m², einer einseitigen Vernadelung mit 30 Stichen/cm² bei einer Einsatz der Nadel GrozBeckert 15X18X36X3 M333 G 3417 gefertigt. Zur Materialversteifung und Verzögerung der biologischen Abbaubarkeit wurden einseitig eine heimkompostierbare optimont-Diacetat-Folie mit einer Dicke von 100 μm der Fa. Bleher Folientechnik GmbH mit einer Geschwindigkeit von 1,5 m bei 200°C auf das Hanfvlies mit einer Thermofixanlage der Fa. Schott&Meißner aufkaschiert. Anschließend erfolge das Herausschneiden der einzelnen Pflanztopfgrundflächen mit einem Flachbettcutter der Fa. Bullmer bei Einsatz folgenden Schnittbildes: **Figur 8** stellt dar eine Schnittbildskizze eines Zuschnitts für einen Pflanztopf mit einer Höhe von 15 cm bei einer Gesamtfläche von 294 cm² und einer späteren 3D-Fixierung mittels formschlüssiger Verzahnung. Nach dem Zuschneiden erfolgte das Konfektionieren durch 3D-Faltung und Fixieren der 3D-Faltung mittels formschlüssiger Laschenverbindung. Diese Topfvariante des Behälters kann für den Transport platzsparendes ineinander gestapelt werden. Die Figuren 9a und 9b stellen dar einen Pflanztopf mit außen aufkaschierter Cellulosediacatatfolie, bereit für die Befüllung mit Erdsubstrat und Baumsamen sowie eine Schnittbildskizze für einen Pflanztopf mit einer Höhe von 15 cm für eine späteren 3D-Fixierung mittels verklebter Überlappungen im Seiten und Bodenbereich.

**Beispiel 3**

Ein Pflanztopf zur 8-wöchigen Anzucht von Stieleichen wurde aus einem Grundnadelvlies aus 100% Rösthanf mit einer Flächenmasse von 400 g/m², einer einseitigen Vernadelung mit 30 Stichen/cm² bei einer Einsatz der Nadel GrozBeckert 15X18X36X3 M333 G 3417 gefertigt. Zur Materialversteifung und Verzögerung der biologischen Abbaubarkeit wurden einseitig 80 g/m$^2$ Carnaubawachs T1 Powder Fa. Willy Benecke mittels einer Pulverstreuanlage der Fa. bepulvert und mittels einer Thermofixanlage der Fa. Schott&Meissner bei 115° das Carnaubawachs aufgeschmolzen und unter Pressruck mit dem Hanfvlies verbunden. Anschließend erfolgt der Zuschnitt der einzelnen Pflanztopfgrundflächen mit einem Flachbettcutter der Fa. Bullmer bei Einsatz folgenden Schnittbildes gemäß Figur 9b. Nach dem Zuschneiden erfolgte das Konfektionieren durch 3D-Faltung und Verbinden einer Längsüberlappung sowie eines Überlappungsbereichs für den Boden mit einem biologisch abbaubaren Hotmeltkleber Capa™ 6250 auf Basis von Polycaprolacton mit einer Klebenaht von 0,0343g/cm im Heißklebeverfahren.

**Bezugszeichen:**

**0**    Behälter
**1**    Seitenwand
**2**    Boden
**3**    Zuschnitt
**4**    Kante
**5**    Verbindungsmittel, insbesondere umfassend Klebstoff, mechanische Verbindungmittel, wie metallische Verbindungsmittel oder natürliche Verbindungsmittel
**6**    Biegezugabe(n)

**Patentansprüche**

1. Behältnis (0) zur Anzucht von Pflanzen aufweisend einen Hohlraum zur Aufnahme von Saatgut und optional Substrat sowie mindestens eine Seitenwand (1)
   **dadurch gekennzeichnet, dass**
   das Material des Behälters umfasst ein flächig ausgebildetes textiles Gebilde, und

   i) natürliche Wachse ausgewählt aus pflanzlichen Wachsen und tierischen Wachsen,
   ii) teilsynthetische Wachse auf Basis von natürlichen Wachsen, pflanzlichen Ölen oder Mischungen dieser.

2. Behälter nach Anspruch 1, **dadurch gekennzeichnet, dass** das flächig ausgebildete ein Nadelvliesstoff ist.

3. Behältnis nach Anspruch 1 oder 2, **dadurch gekennzeichnet, dass** die

   i) natürlichen Wachse umfassen

   a) pflanzliche Wachse umfassend Reiswachs, Zuckerrohrwachs, Sonnenblumenwachs, Candelillawachs, Rapswachs, Carnaubawachs, Jojobaöl, Korkwachs, Guarumawachs (*Calathea lutea*), Ouricuriwachs (*Syagrus coronata*), Kuba-Palmenwachs (*Copernicia hospita*), Espartowachs (*Lygeum spartum, Stipa tenacissima*), Baumwollwachs, Reiskleiewachs, Flachswachs, Torfwachs und Rosen-wachs, Jasminwachs oder das *Peetha*-Wachs vom Wachskürbis, sowie *Myrtewachs* (*Myrica cerifera*), *Wachsfeigenwachs* (*Ficus variegata*), Sojawachs und/oder Mischungen umfassend zwei der genannten natürlichen Wachse, und/oder
   b) tierische Wachse umfassen Wollwachs, Chinawachs, Bienenwachs, Bürzeldrüsenfett, Talg, Insektenwachs, Phthiocerole (von Mykobakterien), und/oder Gemische umfassend mindestens zwei der vorgenannten natürlichen Wachse.

4. Behälter nach einem der Ansprüche 1 bis 3, **dadurch gekennzeichnet, dass** der Behälter aus einem Zuschnitt (3) eines flächig ausgebildeten textiles Gebildes gebildet ist.

5. Behälter nach einem der Ansprüche 1 bis 4, **dadurch gekennzeichnet, dass** das flächig ausgebildete textile Gebilde mit mindestens einem i) natürlichen Wachs, ii) teilsynthetischen Wachs auf Basis von natürlichen Wachsen, pflanzlichen Ölen oder einer Mischung dieser beschichtet und/oder getränkt ist.

6. Behälter nach einem der Ansprüche 1 bis 5, **dadurch gekennzeichnet, dass** das Behältnis (0) mit Hohlraum zur Aufnahme von Saatgut mit mindestens einer Seitenwand und, optional zumindest teilweise einen Boden, gebildet ist aus einem flächig ausgebildeten, textilen Gebilde eines Zuschnitts, insbesondere eines faltbaren Zuschnitts zur faltenden Herstellung des Behälters, optional wobei der Zuschnitt Biegezugabe(n) (6) zur Herstellung von Verbindungen des gefalteten Behälters aufweist.

7.  Behälter nach einem der Ansprüche 1 bis 6, **dadurch gekennzeichnet, dass** Material des flächig ausgebildeten textilen Gebildes umfasst Naturfasern umfassend Pflanzenfasern, Tierfasern, insbesondere Naturfasern, Regeneratfasern und/oder Gemische davon.

8.  Behälter nach einem der Ansprüche 1 bis 7, **dadurch gekennzeichnet, dass** das Material des flächig ausgebildeten textilen Gebildes umfasst

    50 bis 95 Gew.-% Naturfasern, Regeneratfasern und/oder Gemische davon, und
    5 bis 50 Gew.-% i) natürliche Wachse ausgewählt aus pflanzlichen Wachsen und tierischen Wachsen, ii) teilsynthetische Wachse auf Basis von natürlichen Wachsen, pflanzlichen Ölen und/oder Mischungen dieser, und optional
    0 bis 45 Gew.-% biologisch abbaubare Folie(n) und/oder Stützgitter,
    0 bis 45 Gew.-% anorganische Füllstoffe, und optional
    0 bis 25 Gew.-% Pflanzenstärkungsmittel oder Zusammensetzung von Pflanzenstärkungsmittel,
    wobei die Gesamtzusammensetzung des Materials des flächig ausgebildeten textilen Gebildes 100 Gew.-% umfasst.

9.  Behälter nach einem der Ansprüche 1 bis 8, **dadurch gekennzeichnet, dass** das Material des Behälters umfasst

    - 90 bis 99,9 Gew.-% eines flächig ausgebildeten, textilen Gebildes,

        wobei das Material des flächig ausgebildeten Gebildes umfasst
        50 bis 95 Gew.-% Naturfasern, Regeneratfasern und/oder Gemische davon, und
        5 bis 50 Gew.-% i) natürliche Wachse ausgewählt aus pflanzlichen Wachsen und tierischen Wachsen, ii) teilsynthetische Wachse auf Basis von natürlichen Wachsen, pflanzlichen Ölen oder Mischungen dieser, und optional
        0 bis 45 Gew.-% biologisch abbaubare Folie und/oder Stützgitter,
        0 bis 45 Gew.-% anorganische Füllstoffe, und optional
        0 bis 25 Gew.-% Pflanzenstärkungsmittel oder Zusammensetzung von Pflanzenstärkungsmittel,
        wobei die Gesamtzusammensetzung des Materials des flächig ausgebildeten textilen Gebildes 100 Gew.-% umfasst, und

    - 0,1 bis 10 Gew.-% Verbindungsmittel, insbesondere stoffliche Verbindungsmittel, vorzugsweise umfassend Klebstoff, und/oder mechanische Verbindungsmittel, bevorzugt metallische oder natürliche mechanische Verbindungsmittel und/oder natürliche Klebstoffe.

10. Behälter nach einem der Ansprüche 1 bis 9, **dadurch gekennzeichnet, dass** das Behältnis (0) mit Hohlraum zur Aufnahme von Saatgut mit mindestens einer Seitenwand und, optional zumindest teilweise einem Boden, gebildet ist aus einem flächig ausgebildeten, textilen Gebilde eines faltbaren Zuschnitts, insbesondere zur Herstellung eines durch Faltung erhältlichen Behälters.

11. Behälter nach einem der Ansprüche 1 bis 10, **dadurch gekennzeichnet, dass** das Flächengewicht des Gebildes, bevorzugt des Nadelvliesstoffes von 200 bis 1000 g/m$^2$ beträgt, insbesondere von 350 bis 800 g/m$^2$, bevorzugt von 350 bis 550 g/m$^2$.

12. Behälter nach einem der Ansprüche 1 bis 11, **dadurch gekennzeichnet, dass** das flächige textile Gebilde eine Biegesteifheit (mN•cm) bestimmt nach EN ISO 9073-7 : 1995 (Cantilever-Methode) von größer gleich 950 mN•cm aufweist, insbesondere weist das Gebilde eine Biegesteifheit von 950 mN•cm bis 2500 mN•cm auf oder Behälter erhältlich aus einem faltbaren Zuschnitt eines textilen flächigen Gebildes zur Ausbildung des Behälters optional mit Biegezugabe(n) mit einer Biegesteifheit von größer gleich 950 mN•cm.

13. Abgerollter Zuschnitt eines flächigen textilen Gebildes zur Herstellung des Behälters nach einem der Ansprüche 1 bis 12.

14. Verwendung eines Behälters nach einem der Ansprüche 1 bis 12 als Anzuchtbehälter für Samen und/oder Keimlingen von Pflanzen, insbesondere Samen und/oder Keimlingen von Forstgehölzen, bevorzugt von Pflanzen mit Pfahlwurzeln.

15. Kit umfassend mindestens zwei Behälter nach einem der Ansprüche 1 bis 12 und ein Trägersystem zur Aufnahme der mindestens zwei Behälter.

**Fig. 1**

**Fig. 2**

**Biegesteifheit G [mN.cm] in Abhängigkeit vom Wachsanteil [%]**

$y = 30{,}108e^{0{,}0944x}$
$R^2 = 0{,}9539$, $n=15$

Fig. 3a

**Biegesteifheit G [mN.cm] in Abhängigkeit vom Wachsanteil [g/m²]**

$y = 0{,}0381x^2 - 6{,}2774x + 312{,}9$
$R^2 = 0{,}9927$

Fig. 3b

**Fig. 4**

**Fig. 5**

Fig. 6

Fig. 7a

Fig. 7b

Figur 8

Figur 9a

Figur 9b

EP 4 427 583 A1

Europäisches Patentamt
European Patent Office
Office européen des brevets

# EUROPÄISCHER RECHERCHENBERICHT

**Nummer der Anmeldung**

EP 24 16 1686

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 613 905 A1 (WIBMER & CO KG [DE]) 7. September 1994 (1994-09-07) | 1-4,7, 11-15 | INV. A01G9/029 |
| Y | * S. 2 Zeile 9-13 S. 3 Zeile 45-47 S. 5 Zeile 58 - S. 6 Zeile 4 S. 6 Zeile 3-4; Ansprüche 1,5,6; Beispiele 3-7 * ----- | 5,6,8-10 | A01G9/04 A01G9/02 |
| Y | AT 390 165 B (SELLNER PETER BAUMSCHULEN [DE]) 26. März 1990 (1990-03-26) * Seite 3, Zeile 1 - Zeile 21; Abbildung 2 * ----- | 6,10 | |
| Y | CN 107 205 344 A (JIFFY INT AS) 26. September 2017 (2017-09-26) * Ansprüche 72-74 * ----- | 8,9 | |
| A | DE 196 39 145 A1 (WIBMER GMBH U CO KG PAPIER FOR [DE]) 5. März 1998 (1998-03-05) ----- | 1,4,6,7, 14 | |
| Y | GB 493 609 A (BRITISH WAXED WRAPPINGS LTD; ROWLAND JAY BROWNE) 11. Oktober 1938 (1938-10-11) * Zusammenfassung; Abbildungen 1-15 * ----- | 5,10 | **RECHERCHIERTE SACHGEBIETE (IPC)** A01G |

Der vorliegende Recherchenbericht wurde für alle Patentansprüche erstellt

| Recherchenort | Abschlußdatum der Recherche | Prüfer |
|---|---|---|
| Den Haag | 2. Juli 2024 | Spitz, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 24 16 1686

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2024

| Im Recherchenbericht angeführtes Patentdokument | Datum der Veröffentlichung | Mitglied(er) der Patentfamilie | | Datum der Veröffentlichung |
|---|---|---|---|---|
| EP 0613905      A1 | 07-09-1994 | KEINE | | |
| AT 390165       B | 26-03-1990 | AT | 390165 B | 26-03-1990 |
| | | CH | 660942 A5 | 30-06-1987 |
| | | DE | 8212729 U1 | 26-08-1982 |
| CN 107205344    A | 26-09-2017 | CN | 107205344 A | 26-09-2017 |
| | | CN | 117256350 A | 22-12-2023 |
| | | EP | 3247195 A1 | 29-11-2017 |
| | | US | 2018000017 A1 | 04-01-2018 |
| | | WO | 2016118442 A1 | 28-07-2016 |
| DE 19639145     A1 | 05-03-1998 | KEINE | | |
| GB 493609       A | 11-10-1938 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020132306 A1